# EUROPEAN PATENT APPLICATION

(11) **EP 2 503 629 A1**
(43) Date of publication of application: **26.09.2012**
(21) Application number: 10830067.4
(22) Date of filing: 15.11.2010
(51) Int. Cl.: H01M 4/86, B01J 31/22, C08G 61/00, C08L 101/00, H01M 4/90, H01M 8/02

(54) **MEMBRANE ELECTRODE ASSEMBLY AND FUEL CELL USING SAME**

(30) Priority: 16.11.2009 JP 2009260723
(71) Applicant: Sumitomo Chemical Company, Limited, Tokyo 104-8260 (JP)
(72) Inventor: KOSHINO, Nobuyoshi, Tsukuba-shi Ibaraki 305-0821 (JP); ONODERA, Toru, Tsukuba-shi Ibaraki 300-3261 (JP)
(74) Representative: Brunetti, Fabrizio
(86) International application number: PCT/JP2010/070646
(87) International publication number: WO 2011/059115

(57) **Abstract**

A membrane-electrode assembly having catalyst layers containing an electrode catalyst disposed on the both sides of an electrolyte membrane, wherein at least one of the above-described catalyst layers contains a non-precious metal electrode catalyst and an ionomer having an ion exchange capacity of 1.2 meq/g or more.

## Description

### Technological Field

The present invention relates to a membrane-electrode assembly and a fuel battery using the same.

### Background Art

Currently, for solid polymer-type fuel batteries and direct methanol-type fuel batteries being developed toward practical application, a membrane-electrode assembly having an electrode catalyst using only platinum which is a precious metal as a catalyst constituent metal is known. However, there are a problem of high cost of platinum and a problem of possibility of further depletion of resources because of limited reserve amount.

Therefore, there is recently suggested a membrane-electrode assembly having an electrode catalyst composed of a cobalt/pyrrole/carbon composite body using only cobalt which is a non-precious metal as a catalyst constituent metal and a binder composed of an ionomer having an ion exchange capacity of 0.9 to 1.1 meq/g ("Nature", Vol. 443, p. 63-66 (2006) (non-patent document 1)).

With the above-described membrane-electrode assembly, however, the current density of the fuel battery is not sufficient.

### Summary of the Invention

Thus, the present invention has an object of providing a fuel battery excellent in current density and a membrane-electrode assembly which is useful for production of the fuel battery.

The present invention provides the following (1) to (7).
(1) A membrane-electrode assembly having catalyst layers containing an electrode catalyst disposed on the both sides of an electrolyte membrane, wherein at least one of the above-described catalyst layers contains a non-precious metal electrode catalyst and an ionomer having an ion exchange capacity of 1.2 meq/g or more.
(2) The membrane-electrode assembly according to (1), wherein the above-described non-precious metal electrode catalyst contains at least one metal selected from the group consisting of titanium, vanadium, chromium, manganese, iron, cobalt, nickel, copper, zirconium, niobium, molybdenum, tantalum and tungsten.
(3) The membrane-electrode assembly according to (1) or (2), wherein the above-described non-precious metal electrode catalyst is composed of a metal complex or a modified metal complex.
(4) The membrane-electrode assembly according to any one of (1) to (3), wherein the above-described ionomer is a polymer electrolyte obtained by introducing a sulfonate group into a polymer compound having an aromatic ring in the main chain.
(5) The membrane-electrode assembly according to any one of (1) to (4), wherein the catalyst layer containing a non-precious metal electrode catalyst and an ionomer having an ion exchange capacity of 1.2 meq/g or more contains further a carbon carrier, and the weight ratio of the ionomer with respect to the weight of the above-described carbon carrier is more than 0 and 1.0 or less.
(6) The membrane-electrode assembly according to any one of (1) to (5), wherein the above-described electrolyte membrane is an aromatic hydrocarbon polymer electrolyte membrane.
(7) A fuel battery comprising the membrane-electrode assembly according to any one of (1) to (6).

The fuel battery of the present invention is excellent in current density. The membrane-electrode assembly of the present invention is useful for production of the above-described fuel battery, and is inexpensive.

### Brief Explanation of Drawings

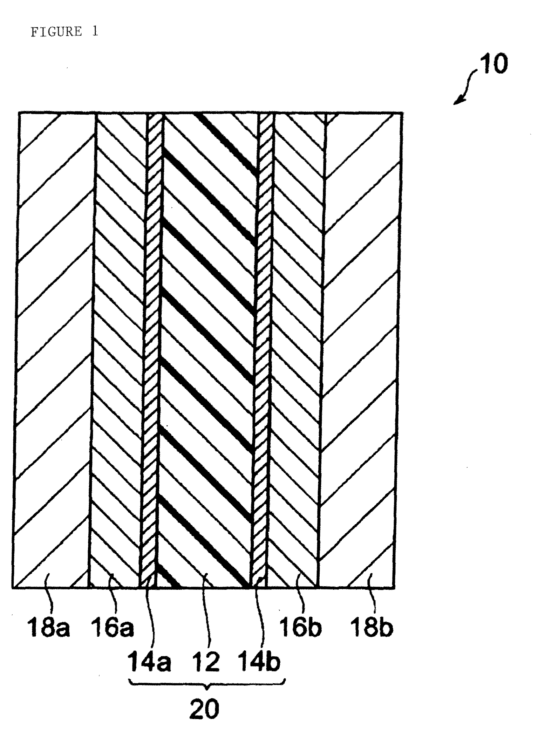

Fig. 1 is a longitudinal sectional view of one example of the fuel battery cell using the membrane-electrode assembly of the present invention.

### Modes for Carrying Out the Invention

The present invention will be illustrated in detail below.

### [Membrane-electrode assembly]

The membrane electrode assembly (MEA) of the present invention has catalyst layers containing an electrode catalyst disposed on the both sides of an electrolyte membrane, and at least one of the above-described catalyst layers contains a non-precious metal electrode catalyst and an ionomer having an ion exchange capacity of 1.2 meq/g or more. In the membrane-electrode assembly of the present invention, the above-described non-precious metal electrode catalysts may be used singly or in combination and the above-described ionomers may be used singly or in combination, respectively.

### (Catalyst layer)

### · Non-precious metal electrode catalyst

The non-precious metal electrode catalyst in the membrane-electrode assembly of the present invention is an electrode catalyst containing a non-precious metal element as a catalyst component. The non-precious metal element contained in the above-described non-precious metal electrode catalyst may be a non-charged atom or a charged ion.

As the above-described non-precious metal element, non-precious metal elements belonging to period 4-period 6 of the periodic table of elements are preferable. The above-described non-precious metal elements belonging to period 4-period 6 of the periodic table of elements include scandium, titanium, vanadium, chromium, manganese, iron, cobalt, nickel, copper, zinc, yttrium, zirconium, niobium, molybdenum, lanthanum, cerium, praseodymium, neodymium, samarium, europium, gadolinium, terbium, dysprosium, holmium, erbium, thulium, ytterbium, lutetium, hafnium, tantalum, tungsten, rhenium and the like, preferably, titanium, vanadium, chromium, manganese, iron, cobalt, nickel, copper, yttrium, zirconium, niobium, molybdenum, hafnium, tantalum and tungsten, more preferably, titanium, vanadium, manganese, iron, cobalt, nickel and copper, particularly preferably, iron and cobalt.

The above-described non-precious metal elements may be contained singly or in combination in the above-described non-precious metal electrode catalyst.

When the above-described non-precious metal electrode catalyst is a cathode (oxygen electrode or air electrode) electrode catalyst, the cathode electrode catalyst is composed of a material showing a catalytic action on the following oxygen reduction reaction.

O₂ + 4H⁺ + 4e⁻ → 2H₂O

Exemplified as the above-described material showing a catalytic action on the oxygen reduction reaction are metal complexes, modified metal complexes, polymers having a residue of a metal complex, modified "polymers having a residue of a metal complex", metal coordination polymers, modified metal coordination polymers, metal carbides, metal nitrides, metal oxides, metal carbonitrides, metal oxycarbonitrides, nitrogen-containing carbons, and carbon alloy fine particles doped with a nitrogen atom and/or a boron atom, preferably, metal complexes, modified metal complexes, polymers having a residue of a metal complex, modified "polymers having a residue of a metal complex", metal coordination polymers, modified metal coordination polymers, metal nitrides, metal carbonitrides, metal oxycarbonitrides, nitrogen-containing carbons, and carbon alloy fine particles doped with a nitrogen atom and/or a boron atom, more preferably, metal complexes, modified metal complexes, polymers having a residue of a metal complex, modified "polymers having a residue of a metal complex", metal coordination polymers and modified metal coordination polymers, particularly preferably, metal complexes and modified metal complexes.

Here, the metal coordination polymer is a compound obtained by incorporating a non-precious metal atom or a non-precious metal ion into a polymer having a coordinating property by complex formation. In the complex formation, the polymer having a coordinating property may release one or several hydrogen ions.

As the above-described polymer having a coordinating property, exemplified are electric conductive polymers such as polypyrrole, polyaniline, polypyridine and the like.

When the above-described non-precious metal electrode catalyst is an anode (fuel electrode) electrode catalyst, the anode electrode catalyst is composed of a material showing a catalytic action on the following oxidation reaction.
· In the case of use of hydrogen as a fuel

   H₂ → 2H⁺ + 2e⁻
· In the case of use of methanol as a fuel

   CH₃OH + H₂O → CO₂ + 6H⁺ + 6e⁻

As the anode fuel, use can be made of alcohols having 2 to 10 carbon atoms such as ethanol, propanol and the like; ethers having 2 to 10 carbon atoms such as dimethyl ether, diethyl ether and the like; aldehydes having 1 to 5 carbon atoms such as formic acid, formaldehyde and the like; hydrocarbons having 1 to 20 carbon atoms such as methane, ethane, kerosene and the like; nitrogen-containing compounds such as ammonia, hydrazine, ammoniaborane and the like; etc. in addition to hydrogen and methanol.

In the case of use of hydrogen, alcohols or ethers as the anode fuel, preferable as the above-described material showing a catalytic action on the oxidation reaction are materials showing a high catalytic action on the oxidation reaction of them. Exemplified as such materials are metal complexes, modified metal complexes, polymers having a residue of a metal complex, modified "polymers having a residue of a metal complex", metal coordination polymers, modified metal coordination polymers, hydrated titanium oxide having a residue of a metal complex, metal carbides, metal nitrides, metal oxides, metal carbonitrides, metal oxycarbonitrides, nitrogen-containing carbons, carbon alloy fine particles doped with a nitrogen atom and/or a boron atom, transition metal silicides and heteropoly acids, preferably, metal complexes, modified metal complexes, polymers having a residue of a metal complex, modified "polymers having a residue of a metal complex", metal coordination polymers, modified metal coordination polymers, metal carbides, metal nitrides, metal carbonitrides, metal oxycarbonitrides, transition metal silicides and heteropoly acids, more preferably, metal complexes, modified metal complexes, polymers having a residue of a metal complex, modified "polymers having a residue of a metal complex", metal coordination polymers and modified metal coordination polymers, particularly preferably, metal complexes and modified metal complex.

The number of atoms or ions of the non-precious metal element contained in the molecule of the above-described metal complex is preferably 1 to 10, more preferably 1 to 5, further preferably 1 to 4, particularly preferably 1 or 2.

It is preferable that the above-described metal complex has in its molecule a nitrogen atom-containing aromatic heterocyclic ring. Exemplified as the nitrogen atom-containing aromatic heterocyclic ring are a pyridine ring, a pyridazine ring, a pyrimidine ring, a pyridazine, ring, a 1,3,5-triazine ring, a 1,2,4-triazine ring, a 1,2,4,5-tetrazine ring, a 1H-pyrrole ring, a 2H-pyrrole ring, a 3H-pyrrole ring, an imidazole ring, a pyrazole ring, a 1,2,3-triazole ring, a 1,2,4-triazole ring, an oxazole ring, an isoxazole ring, a thiazole ring, an isothiazole ring, a 1,3,4-oxadiazole ring, a 1,2,5-oxadiazole ring, a 1,3,4-thiadiazole ring and a 1,2,5-thiadiazole ring.

Exemplified as the above-described metal complex are metal complexes represented by the following formulae (X-1) to (X-15), preferably, metal complexes represented by the following formulae (X-1) to (x-7). A hydrogen atom in the ligand constituting the metal complex in the formulae (X-1) to (X-15) may be substituted by a substituent. M¹ and M² in the formulae (X-1) to (X-15) represent each independently a non-precious metal atom. In the formulae, the charge of the complex is abbreviated.

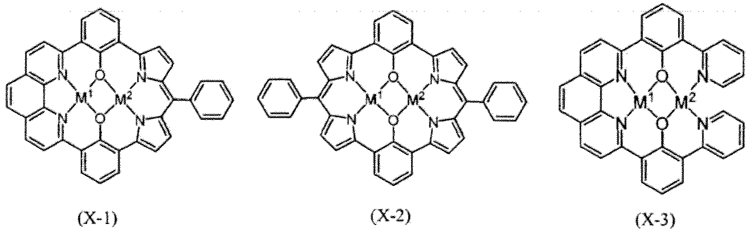

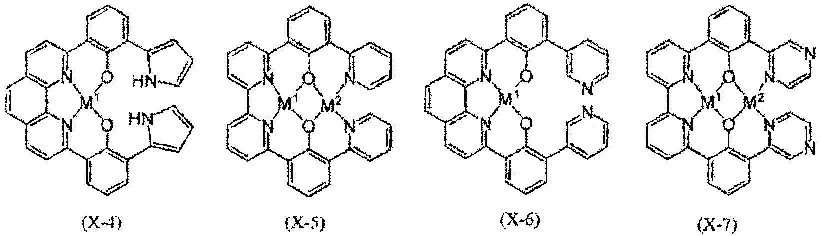

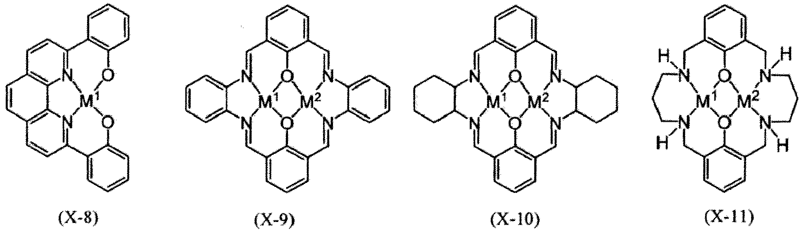

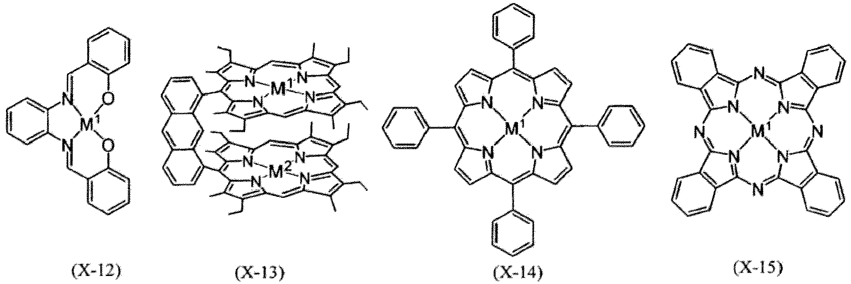

The above-described substituent includes a halogeno group, a hydroxy group, a carboxyl group, a mercapto group, a sulfonate group, a nitro group, an amino group, a cyano group, a phosphonate group, a silyl group substituted by an alkyl group having 1 to 4 carbon atoms, a linear or branched alkyl group having 1 to 50 carbon atoms, a cyclic alkyl group having 3 to 50 carbon atoms, an alkenyl group having 2 to 50 carbon atoms, an alkynyl group having 2 to 50 carbon atoms, an alkoxy group having 1 to 50 carbon atoms, an aryl group having 6 to 60 carbon atoms, an aralkyl group having 7 to 50 carbon atoms, a mono-valent heterocyclic group and the like, preferably, a halogeno group, a mercapto group, a hydroxy group, a carboxyl group, a linear or branched alkyl group having 1 to 20 carbon atoms, a cyclic alkyl group having 3 to 20 carbon atoms, an alkoxy group having 1 to 20 carbon atoms, an aryl group having 6 to 30 carbon atoms and a mono-valent heterocyclic group.

The above-described halogeno group includes a fluoro group, a chloro group, a bromo group and an iodo group.

The above-described silyl group substituted by an alkyl group having 1 to 4 carbon atoms includes a trimethylsilyl group, a triethylsilyl group, a tertbutyldimethylsilyl group, a triisopropylsilyl group and the like.

The above-described linear or branched alkyl group includes a methyl group, an ethyl group, a propyl group, an isopropyl group, a butyl group, an isobutyl group, a tert-butyl group, a sec-butyl group, a pentyl group, a hexyl group, a heptyl group, an octyl group, a nonyl group, a decyl group, a dodecyl group, a pentadecyl group, an octadecyl group, a dococyl group and the like.

The above-described cyclic alkyl group includes a cyclopropyl group, a cyclobutyl group, a cyclopentyl group, a cyclohexyl group, a cyclononyl group, a cyclododecyl group, a norbornyl group, an adamantyl group and the like.

As the above-described alkenyl group, exemplified are the above-described linear or branched alkyl groups in which any one carbon-carbon single bond (C-C) is substituted by a double bond. As the above-described alkenyl group, an ethenyl group, a propenyl group, a 3-butenyl group, a 2-butenyl group, a 2-pentenyl group, a 2-hexenyl group, a 2-nonenyl group and a 2-dodecenyl group are preferable.

As the above-described alkynyl group, exemplified are the above-described linear or branched alkyl groups in which any one carbon-carbon single bond (C-C) is substituted by a triple bond. As the above-described alkynyl group, an ethynyl group, a 1-propynyl group, a 2-propynyl group, a 1-butynyl group, a 2-butynyl group, a 1-pentynyl group, a 2-pentynyl group, a 1-hexynyl group, a 2-hexynyl group and a 1-octynyl group are preferable, and an ethynyl group is particularly preferable.

As the above-described alkoxy group, exemplified are mono-valent groups obtained by linking the above-described linear or branched alkyl group to an oxygen atom and mono-valent groups obtained by linking the above-described cyclic alkyl group to an oxygen. As the above-described alkoxy group, a methoxy group, an ethoxy group, a propoxy group, an isopropoxy group, a butoxy group, an isobutoxy group, a tert-butoxy group, a sec-butoxy group, a pentyloxy group, a hexyloxy group, a heptyloxy group, an octyloxy group, a nonyloxy group, a decyloxy group, a dodecyloxy group, a pentadecyloxy group, an octadecyloxy group, a cyclopropoxy group, a cyclobutoxy group, a cyclopentyloxy group and a cyclohexyloxy group are preferable.

The above-described aryl group includes a phenyl group, a 1-naphthyl group, a 2-naphthyl group, a 1-anthracenyl group, a 2-anthracenyl group, a 9-anthracenyl group, a 1-tetracenyl group, a 2-tetracenyl group, a 5 - tetracenyl group, a 1-pyrenyl group, a 2-pyrenyl group, a 4-pyrenyl group, a 2-perylenyl group, a 3-perylenyl group, a 2-fluorenyl group, a 3-fluorenyl group, a 4-fluorenyl group, a 1-biphenylenyl group, a 2-biphenylenyl group, a 2-phenanthrenyl group, a 9-phenanthrenyl group, a 6-chrysenyl group, a 1-coronenyl group and the like. A hydrogen atom in the above-described aryl group may be substituted by the above-described substituent.

The above-described aralkyl group includes a benzyl group, a 1-phenylethyl group, a 2-phenylethyl group, a 1-phenyl-1-propyl group, a 1-phenyl-2-prapyl group, a 2-phenylpropyl group, a 3 - phenyll-propyl group and the like.

The above-described mono-valent heterocyclic group means an atomic group remaining after removal of one hydrogen atom from a heterocyclic compound. As the mono-valent heterocyclic group, mono-valent aromatic heterocyclic groups are preferable. The above-described mono-valent heterocyclic group includes a pyridyl group, a pyrazyl group, a pyrimidyl group, a pyridazyl group, a pyrrolyl group, a furyl group, a thienyl pyrrolyl group, a furyl group, a thienyl group, an imidazolyl group, a pyrazolyl group, a thiazolyl group, an oxazolyl group and the like.

The above-described metal complex may contain a neutral molecule and/or a counter ion.

Exemplified as the above-described neutral molecule are nitrogen atom-containing compounds such as ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, thiazole, isothiazole, indole, indazole, quinoline, isoquinoline, phenanthridine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, piperazine, 1,4-diazabicyclo[2,2,2]octane, pyridine-N-oxide, 2,2'-bipyridine-N.N'-dioxide, oxamide, dimethylglyoxime, o-aminophenol and the like; oxygen-containing compounds such as water, methanol, ethanol, 1-propanol, 2-propanol, n-butyl alcohol, isobutyl alcohol, sec-butyl alcohol, tert-butyl alcohol, 2-methoxyethanol, phenol, oxalic acid, catechol, salicylic acid, phthalic acid, 2,4-pentanedione, 1,1,1-trifluoro-2,4-pentanedione, hexafluoropentanedione, 1,3-diphenyl-1,3-propanedione, 2,2'-binaphthol and the like; sulfur-containing compounds such as dimethyl sulfoxide, urea and the like; phosphorus-containing compounds such as 1,2-bis(dimethylphosphino)ethane, 1,2-phenylenebis(dimethylphosphine) and the like, preferably, ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, indole, indazole, quinoline, isoquinoline, phenanthridine, cinnoline, phthalazine, quinazoline, quinoxaline, 1,8-naphthylidine, acridine, 2,2'-bipyridine, 4, 4 ' -bipyridine, 1,10-phenanthroline, ethylenediamine, propylenediamine, phenylenediamine, cyclohexanediamine, piperazine, 1,4-diazabicyclo[2,2,2]octane, pyridine-N-oxide, 2,2'-bipyridine-N,N'-dioxide, oxamide, dimethylglyoxime, o-aminophenol, water, phenol, oxalic acid, catechol, salicylic acid, phthalic acid, 2,4-pentanedione, 1,1,1-trifluoro-2,4-pentanedione, hexafluoropentanedione, 1,3-diphenyl-1,3-propanedione and 2,2'-binaphthol, more preferably, ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, indole, indazole, quinoline, isoquinoline, phenanthridine, cinnoline, phthalazine, quinazoline, quinoxaline, 1, 8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N.N'-dioxide, o-aminophenol, phenol, catechol, salicylic acid, phthalic acid, 1,3-diphenyl-1,3-propanedione and 2,2'-binaphthol, particularly preferably, pyridine, pyrrole, pyridazine, pyrimidine, pyrazine, pyrazole, imidazole, oxazole, indole, quinoline, isoquinoline, acridine, 2,2'-bipyridine, 4,4'-bipyridine, 1,10-phenanthroline, phenylenediamine, piperazine, 1,4-diazabicyclo[2,2,2]octane, pyridine-N-oxide, 2,2'-bipyridine-N,N'-dioxide, o-aminophenol and phenol.

The above-described counter ions are classified into counter ions having an anionic property and counter ions having a cationic property. The counter ions may be a counter ion electrically neutralizing the above-described metal complex itself.

The above-described counter ion having an anionic property includes a hydroxide ion, a cyanide ion, a thiocyanate ion; halide ions such as a fluoride ion, a chloride ion, a bromide ion, an iodide ion and the like; a sulfate ion, a nitrate ion, a carbonate ion, a perchlorate ion, a tetrafluoroborate ion; tetraarylborate ions such as a tetraphenylborate ion and the like; a hexafluorophosphate ion, a methanesulfonate ion, a trifluoromethanesulfonate ion, a p-toluenesulfonate ion, a benzenesulfonate ion, a phosphate ion, a phosphite ion, an acetate ion, a trifluoroacetate ion, a propionate ion, a benzoate ion, a hydroxide ion, a metal oxide ion, a methoxide ion, an ethoxide ion, a 2 - ethylhexanoate ion and the like, preferably, a hydroxide ion, a chloride ion, a sulfate ion, a nitrate ion, a carbonate ion, a perchlorate ion, a tetrafluoroborate ion, a tetraphenylborate ion, a hexafluorophosphate ion, a methanesulfonate ion, a trifluoromethanesulfonate ion, a p-toluenesulfonate ion, a benzenesulfonate ion, a phosphate ion, an acetate ion and a trifluoroacetate ion, more preferably, a hydroxide ion, a chloride ion, a sulfate ion, a nitrate ion, a carbonate ion, a tetraphenylborate ion, a trifluoromethanesulfonate ion, a p-toluenesulfonate ion, an acetate ion, a trifluoroacetate ion and a 2-ethylhexanoate ion.

Exemplified as the above-described counter ion having a cationic property are alkali metal ions, alkaline earth metal ions; tetraalkylammonium ions such as a tetra(n-butyl)ammonium ion, a tetraethylammonium ion and the like; tetraarylphosphonium ions such as a tetraphenylphosphonium ion and the like;, preferably, a lithium ion, a sodium ion, a potassium ion, a rubidium ion, a cesium ion, a magnesium ion, a calcium ion, a strontium ion, a barium ion, a tetra(n-butyl)ammonium ion, a tetraethylammonium ion and a tetraphenylphosphonium ion, more preferably, a tetra(n-butyl)ammonium ion, a tetraethylammonium ion and a tetraphenylphosphonium ion, particularly preferably, a tetra(n-butyl)ammonium ion and a tetraethylammonium ion.

Next, a method of synthesizing the above-described metal complex will be described.

The above-described metal complex is obtained, for example, by organochemically synthesizing a compound acting as a ligand (hereinafter, referred to as "ligand compound") and mixing it with a reactor imparting a metal atom (hereinafter, referred to as "metal-imparting agent").

The above-described metal-imparting agent includes acetates, chlorides, sulfates, carbonates, nitrates and the like of the above-described metals.

The synthesis of the above-described ligand compound can be carried out, for example, by effecting an addition reaction of an organometal reactant to a heterocyclic compound and an oxidation reaction thereof, and a halogenation reaction, then, a cross-coupling reaction using a transition metal catalyst, as described in Tetrahedron., 1999, 55, 8377. It can also be synthesized by a gradual cross-coupling reaction using a halide of a heterocyclic compound.

As described above, the above-described metal complex can be obtained by mixing the ligand compound and the metal-imparting agent in the presence of a suitable reaction solvent. The above-described reaction solvent includes water, acetic acid, ammonia water, methanol, ethanol, n-propanol, isopropyl alcohol, 2-methoxyethanol, 1-butanol, 1,1-dimethylethanol, ethylene glycol, diethyl ether, 1,2-dimethoxyethane, methyl ethyl ether, 1,4-dioxane, tetrahydrofuran, benzene, toluene, xylene, mesitylene, durene, decalin, dichloromethane, chloroform, carbon tetrachloride, chlorobenzene, 1,2-dichlorobenzene, N,N'-dimethylformamide, N,N'-dimethylacetamide, N-methyl-2-pyrrolidone, dimethyl sulfoxide, acetone, acetonitrile, benzonitrile, triethylamine, pyridine and the like, and preferable are reaction solvents in which the ligand compound and the metal-imparting agent can be dissolved. These reaction solvents may be used singly or together in combination.

In the above-described series of reactions, the reaction temperature is usually -10ºC to 200ºC, preferably 0ºC to 150ºC, particularly preferably 0ºC to 100ºC. The reaction time is usually 1 minute to 1 week, preferably 5 minutes to 24 hours, particularly preferably 1 hour to 12 hours. The reaction temperature and the reaction time are determined depending on the kind of the ligand compound and the metal-imparting agent.

As the means for isolating and purifying the generated metal complex from a reaction solution after the reaction in the above-described series of reactions, the optimum means can be selected from known re-crystallization methods, re-precipitation methods and chromatography methods, and these means may also be combined. The generated metal complex may deposit depending on the kind of the above-described reaction solvent, and in this case, the metal complex can be isolated and purified by separating the deposited metal complex by filtration and the like, then, performing a washing operation and a drying operation.

The above-described polymer having a residue of a metal complex means a polymer having a residue obtained by removing a part or all of hydrogen atoms (usually, one atom) in the metal complex.

Embodiments of the above-described polymer having a residue of a metal complex include electric conductive polymers, dendrimers, natural polymers, solid polymer electrolytes, polyethylene, polyethylene glycol, polypropylene and the like, preferably, electric conductive polymers and solid polymer electrolytes.

The electric conductive polymer is a generic name for polymer substances showing a metallic or semi-metallic conductive property (Iwanami Dictionary of Physics and Chemistry, 5-th Edition: published on 1988). The electric conductive polymer includes polyacetylene and derivatives thereof, polyparaphenylene and derivatives thereof, polyparaphenylenevinylene and derivatives thereof, polyaniline and derivatives thereof, polythiophene and derivatives thereof, polypyrrole and derivatives thereof, polyfluorene and derivatives thereof, polyfluorene and derivatives thereof, polycarbazole and derivatives thereof, polyindole and derivatives thereof, and copolymers of the above-described electric conductive polymers, and the like described in "Electric Conductive Polymer" (written by Yoshimura Shinichi, Kyoritsu Publication) and "Latest Application Technology of Electric Conductive Polymer" (edited by Kobayashi Ikuo, CMC publication).

The solid polymer electrolyte includes perfluorosulfonic acid; polymer compounds obtained by sulfonating polyether ether ketone, polyimide, polyphenylene, polyarylene and polyarylene ether sulfone; and the like.

The above-described metal coordination polymer can be produced by refluxing an acetate, a chloride, a sulfate, a carbonate, a nitrate and the like of the above-described non-precious metal element together with a polymer having a coordinating property in a reaction solvent, and the like.

The above-described non-precious metal electrode catalyst may be used singly as a catalyst, or may be combined with other materials.

In the use embodiment combining the above-described non-precious metal electrode catalyst with other materials, it is preferable that the above-described non-precious metal electrode catalyst is supported on a carbon carrier and/or an electric conductive polymer, and it is particularly preferable that the catalyst is used in combination with a carbon carrier.

Examples of the above-described carbon carrier include carbon blacks such as Norit (manufactured by NORIT), Ketjen Black (manufactured by Lion), Vulcan (manufactured by Cabot), Black Pearls (manufactured by Cabot), Acetylene Black (manufactured by Chevron)(all are trade names) and the like; fullerenes such as C60, C70 and the like; carbon nanotubes, multiwall carbon nanotubes, double wall carbon nanotubes, single wall carbon nanotubes, carbon nanohorns, carbon fibers and the like, preferably, carbon blacks.

The above-described carbon carrier may be combined with an electric conductive polymer such as polypyrrole, polyaniline and the like.

When the above-described cathode electrode catalyst is subjected to a modification treatment described later, it may be permissible that an organic compound having a boiling point or melting point of 250ºC or higher or an organic compound having a thermal polymerization initiation temperature of 250ºC or lower is added and the modification treatment is carried out.

Examples of the organic compound having a boiling point or melting point of 250ºC or higher include aromatic compound carboxylic acid derivatives such as perylene-3,4,9,10-tetracarboxylic dianhydride, 3,4,9,10-perylenetetracarboxylic diimide, 1,4,5,8-naphthalenetetracarboxylic dianhydride, 1,4,5,8-naphthalenetetracarboxylic diimide, 1,4,5,8-naphthalenetetracarboxylic acid, pyromellitic acid, pyromellitic dianhydride and the like. Compounds having structures listed below are examples of such organic compounds.

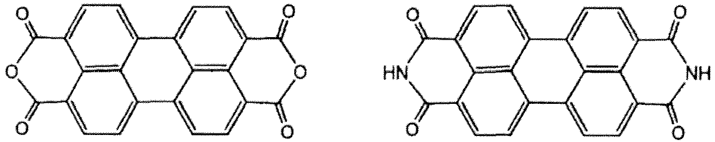

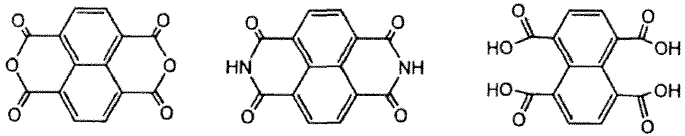

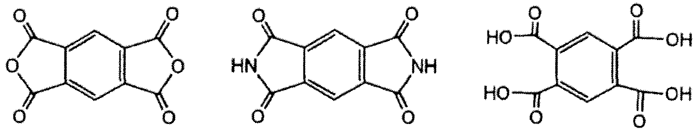

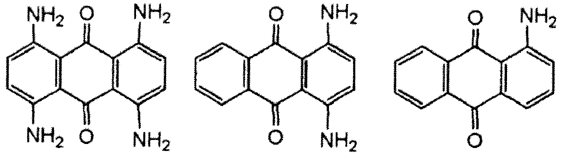

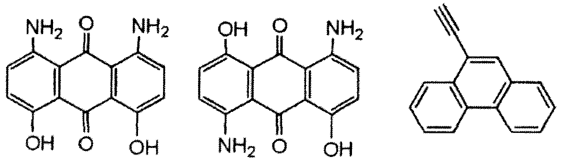

The organic compound having a thermal polymerization initiation temperature of 250ºC or lower is an organic compound having an aromatic ring and a double bond or a triple bond, and acenaphthylene and vinylnaphthalene are exemplified, and compounds shown below are preferable.

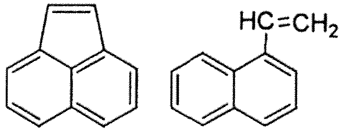

Next, the modification treatment will be described.

The modification treatment means to effect heating, irradiation or electric discharge. Here, it is preferable to carry out the modification treatment until the weight reduction ratio before and after the treatment becomes 1 to 90 wt% and the carbon content ratio after the treatment becomes 5 wt% or more. The modification treatment may be repeated several times.

When the modification treatment is effected, it is preferable that the compound to be modified is dried for 6 hours or more at 15 to 200ºC under 0.13 MPa or less, as a pretreatment. In the pre-treatment, a vacuum drier and the like can be used.

The modification treatment is preferably carried out under an atmosphere of hydrogen, helium, nitrogen, ammonia, oxygen, neon, argon, krypton, xenon or acetonitrile, or a mixed gas thereof, more preferably carried out under an atmosphere of hydrogen, helium, nitrogen, ammonia, oxygen, neon or argon, or a mixed gas thereof, particularly preferably carried out under an atmosphere of hydrogen, nitrogen, ammonia or argon, or a mixed gas thereof.

When the modification treatment is heating, the lower limit of the heating temperature is usually 250ºC, preferably 300ºC, more preferably 400ºC, particularly preferably 500ºC. The upper limit of the heating temperature is usually 1600ºC, preferably 1400ºC, more preferably 1200ºC, particularly preferably 1000ºC.

When the modification treatment is heating, heating is preferably carried out under a reducing atmosphere such as hydrogen, carbon monoxide and the like; under an oxidizing atmosphere such as oxygen, carbonic acid gas, water vapor and the like; under an inert gas atmosphere such as nitrogen, helium, neon, argon, krypton, xenon and the like; under a gas or vapor of a nitrogen-containing compound such as ammonia, acetonitrile and the like; or in the presence of a mixed gas thereof, and more preferably carried out under an atmosphere of hydrogen, or a mixture of hydrogen and the above-described inert gas; under an atmosphere of oxygen, or a mixture of oxygen and the above-described inert gas; or an atmosphere of nitrogen, neon, argon, or a mixture of these gases.

When the modification treatment is heating, the pressure in heating is preferably around a normal pressure of 0.5 to 1.5 atm.

When the modification treatment is heating, it may be permissible for example that under gas sealed condition or gas ventilating condition, the temperature is gradually elevated from room temperature to the intended temperature, then, the temperature is immediately lowered, thereby effecting the modification treatment, and it is preferable that after attaining the intended temperature, a metal complex is heated gradually while maintaining the temperature, since durability thereof can be further improved. The time for maintaining the temperature after attaining the intended temperature is preferably 1 hour to 100 hours, more preferably 1 hour to 40 hours, further preferably 2 hours to 10 hours, particularly preferably 2 hours to 5 hours.

When the modification treatment is heating, a tubular furnace, an oven, a furnace, an IH hot plate and the like can be used as the apparatus for performing heating.

When the modification treatment is irradiation, the compound to be modified is irradiated with an electromagnetic wave or particle beam such as α ray, β ray, neutron ray, electron beam, γ ray, X ray, vacuum ultraviolet ray, ultraviolet ray, visible ray, infrared ray, microwave, radio wave, laser and the like, preferably irradiated with X ray, electron beam, ultraviolet ray, visible ray, infrared ray, microwave or laser, more preferably irradiated with ultraviolet ray, visible ray, infrared ray, microwave or laser.

When the modification treatment is electric discharge, the compound to be modified is subjected to corona discharge, glow discharge or plasma treatment (including low temperature plasma treatment), preferably subjected to a low temperature plasma treatment.

The above-described irradiation or electric discharge method can be carried out according to instruments and treatment methods usually used for surface modification treatments of a polymer film, and described, for example, in a literature (edited by The Adhesion Society of Japan, "chemistry of Surface Analysis and modification (hyomen kaiseki kaishitsu no kagaku)", Nikkan Kogyo Shimbun Ltd., published on December 19, 2003).

The material used in the above-described non-precious metal electrode catalyst is not limited to a cathode material or an anode material, and can be used in a region at which its function can be exerted efficiently.

In the membrane-electrode assembly of the present invention, it is preferable that both the above-described catalyst layers (that is, both the cathode electrode catalyst and the anode electrode catalyst) are composed of a non-precious metal electrode catalyst, and it is more preferable that the non-precious metal electrode catalyst is used as the cathode electrode catalyst, from the standpoint of decreasing as much as possible a reduction in the current density ascribable to deterioration and poisoning of the non-precious metal electrode catalyst. Further, a precious metal electrode catalyst such as platinum and the like (for example, a structure having platinum fine particles supported on a particulate or fibrous carbon such as activated carbon, graphite and the like) may be partially contained, and when one of the above-described catalyst layers (one of the cathode electrode catalyst or the anode electrode catalyst) is a non-precious metal electrode catalyst, the other may be a precious metal electrode catalyst, from the standpoint of feeding stable electric current even if drastic variation of load occurs.

When the relation P between the total weight of non-precious metal electrode catalysts in the above-described catalyst layer and the total weight of non-precious metal electrode catalysts and precious metals in the above-described catalyst layer is defined by the following formula (1), the value P is preferably 0.8 or less, more preferably 0.7 or less, further preferably 0.6 or less, particularly preferably 0.5 or less, for decreasing as much as possible a reduction in the current density ascribable to deterioration and poisoning of the non-precious metal electrode catalyst. The lower limit of P is 0.

P = (total weight of precious metals in catalyst layer)/(total weight of non-precious metal electrode catalysts and precious metals in catalyst layer) formula (1)

### · Ionomer

The above-described ionomer may be one having an ion exchange capacity of 1.2 meq/g or more, and those having an ion exchange capacity of 1.8 meq/g or more are preferable, those of 2.8 meq/g or more are more preferable and those of 3.8 meq/g or more are particularly preferable, since a solid polymer-type fuel battery excellent in electric generation performance is obtained. When the ion exchange capacity of the ionomer is too high, the ionomer is easily dissolved under the working condition of a fuel cell, thereby lowering the battery performance, thus, the above-described ionomer has an ion exchange capacity of preferably 6.0 meq/g or less, more preferably 5.3 meq/g or less, particularly preferably 4.6 meq/g or less.

It is preferable that the above-described ionomer is a polymer electrolyte having an acidic group.

The acidic group which can be contained in the above-described ionomer includes a sulfonate group, a carboxyl group, a phosphonate group, a sulfonylimide group (-SO₂NHSO₂-), a phenolic hydroxyl group and the like, preferably, a sulfonate group and a phosphonate group, more preferably, a sulfonate group.

The above-described polymer electrolyte having an acidic group includes, for example
(A) polymer electrolytes having in its main chain an aliphatic hydrocarbon skeleton optionally having a fluorine atom, and having a sulfonate group and/or phosphonate group in its molecule,
(B) polymer electrolytes having in its main chain an aromatic ring, and having a sulfonate group and/or phosphonate group in its molecule, and
(C) polymer electrolytes having in its main chain at least two repeating units selected from the group consisting of a repeating unit having an aliphatic hydrocarbon skeleton, a repeating unit having an aliphatic hydrocarbon skeleton substituted by a fluorine atom and a repeating unit having an aromatic ring, and having a sulfonate group and/or phosphonate group in its molecule.

In these polymer electrolytes, the ion exchange capacity can be controlled by the amount of a sulfonate group.

The above-described polymer electrolyte (A) in which the aliphatic hydrocarbon skeleton in the main chain has no fluorine atom includes, for example, ethylene-vinylsulfonic acid copolymers; polystyrenes having a sulfonate group; poly(α-methylstyrenes) having a sulfonate group. Such polymer electrolytes are described also in International Publication WO 2007-013532 pamphlet.

The above-described polymer electrolyte (A) in which the aliphatic hydrocarbon skeleton in the main chain has a fluorine atom includes, for example, copolymers containing a repeating unit based on tetrafluoroethylene and a repeating unit based on perfluorovinyl ether having a sulfonate group; copolymers containing a repeating unit based on tetrafluoroethylene and a repeating unit based on perfluorovinyl ether having several sulfonate groups; sulfonic acid type polystyrene-graft-ethylene-tetrafluoroethylene copolymers (ETFE) composed of a main chain obtained by copolymerization of a fluorocarbon vinyl monomer and a hydrocarbon vinyl monomer, and a hydrocarbon side chain having a sulfonate group; and sulfonic acid type poly(trifluorostyrene)-graft-ETFE obtained by graft-polymerizing α , β , β-trifluorostyrene to a copolymer obtained by copolymerization of a fluorocarbon vinyl monomer and a hydrocarbon vinyl monomer, and introducing a sulfonate group into the resultant copolymer. Such polymer electrolytes are described also in JP-A No. 9-102322, US-Patent No. 4,012,303 and US-Patent No. 4,605,685.

As the above-described polymer electrolyte (A), preferable are those in which all hydrogen atoms in the aliphatic hydrocarbon skeleton in the main chain are substituted by a fluorine atom since chemical stability becomes excellent.

The above-described polymer electrolyte (B) includes, for example, polyarylenes having a sulfonate group, polyether ether ketones having a sulfonate group; polysulfones having a sulfonate group; poly ether sulfones having a sulfonate group; poly(arylene ethers) having a sulfonate group; polyimides having a sulfonate group; poly((4-phenoxybenzoyl)-1,4-phenylenes) having a sulfonate group; polyphenylene sulfides having a sulfonate group; polyphenylquinoxalines having a sulfonate group; sulfoarylated polybenzimidazoles; sulfoalkylated polybenzimidazoles; phosphoalkylated polybenzimidazoles; and phosphonated poly(phenylene ethers). Such polymer electrolytes are described also in JP-A No. 9-110982, J. Appl. Polym. Sci., 18, p.1969 (1974).

The above-described polymer electrolyte (C) includes, for example, block copolymers having a sulfonate group and/or phosphonate group.

The block copolymer having a sulfonate group and/or phosphonate group includes, for example, block copolymers composed of a segment (hydrophilic segment) having a sulfonate group and a segment (hydrophobic segment) having substantially no acidic group. Such copolymers are described also in JP-A No. 2001-250567 and International Publication WO 2006-095919 pamphlet.

Of the above-described polymer electrolytes, the above-described polymer electrolytes (B) are preferable, and among them, random copolymers in which aromatic rings constituting the main chain are linked substantially via a direct bonding are preferable. Here, "linked substantially via a direct bonding" means that if the total number of links of aromatic rings is 100%, then, the proportion of the direct bonding is 80% or more. This proportion is preferably 90% or more, more preferably 95% or more.

In the random copolymer in which aromatic rings constituting the main chain are linked substantially via a direct bonding, a hydrogen atom in the aromatic ring constituting the main chain may be substituted by at least one group selected from the group consisting of a fluorine atom, an optionally substituted C1-20 alkyl group, an optionally substituted C1-20 alkoxy group, an optionally substituted C6-20 aryl group, an optionally substituted C6-20 aryloxy group and an optionally substituted C2-20 acyl group.

The optionally substituted C1-20 alkyl group includes, for example, a methyl group, an ethyl group, a n-propyl group, an isopropyl group, a n-butyl group, a sec-butyl group, an isobutyl group, a n-pentyl group, a 2,2-dimethylpropyl group, a cyclopentyl group, a n-hexyl group, a cyclohexyl group, a 2-methylpentyl group, a 2-ethylhexyl group, a nonyl group, a dodecyl group, a hexadecyl group, an octadecyl group, an icosyl group; and those obtained by substituting a hydrogen atom in these groups by a fluorine atom, a hydroxyl group, a nitrile group, an amino group, a methoxy group, an ethoxy group, an isopropyloxy group, a phenyl group, a naphthyl group, a phenoxy group or a naphthyloxy group and having a total carbon number of 20 or less.

The optionally substituted C1-20 alkoxy group includes, for examples, a methoxy group, an ethoxy group, a n-propyloxy group, an isopropyloxy group, a n-butyloxy group, a sec-butyloxy group, a tert-butyloxy group, an isobutyloxy group, a n-pentyloxy group, a 2,2-dimethylpropyloxy group, a cyclopentyloxy group, a n-hexyloxy group, a cyclohexyloxy group, a 2-methylpentyloxy group, a 2-ethylhexyloxy group, a dodecyloxy group, a hexadecyloxy group, an icosyloxy group; and those obtained by substituting a hydrogen atom in these groups by a fluorine atom, a hydroxyl group, a nitrile group, an amino group, a methoxy group, an ethoxy group, an isopropyloxy group, a phenyl group, a naphthyl group, a phenoxy group or a naphthyloxy group and having a total carbon number of 20 or less.

The optionally substituted C6-20 aryl group includes, for example, a phenyl group, a naphthyl group, a phenanthrenyl group, an anthracenyl group; and those obtained by substituting a hydrogen atom in these groups by a fluorine atom, a hydroxyl group, a nitrile group, an amino group, a methoxy group, an ethoxy group, an isopropyloxy group, a phenyl group, a naphthyl group, a phenoxy group or a naphthyloxy group and having a total carbon number of 20 or less.

The optionally substituted C6-20 aryloxy group includes, for example, aryloxy groups such as a phenoxy group, a naphthyloxy group, a phenanthrenyloxy group, an anthracenyloxy group and the like; and those obtained by substituting a hydrogen atom in these groups by a fluorine atom, a hydroxyl group, a nitrile group, an amino group, a methoxy group, an ethoxy group, an isopropyloxy group, a phenyl group, a naphthyl group, a phenoxy group or a naphthyloxy group and having a total carbon number of 20 or less.

The optionally substituted C2-20 acyl group includes, for example, an acetyl group, a propionyl group, a butyryl group, an isobutyryl group, a pivaloyl group, a benzoyl group, a 1-naphthoyl group, a 2-naphthoyl group; and those obtained by substituting a hydrogen atom in these groups by a fluorine atom, a hydroxyl group, a nitrile group, an amino group, a methoxy group, an ethoxy group, an isopropyloxy group, a phenyl group, a naphthyl group, a phenoxy group or a naphthyloxy group and having a total carbon number of 20 or less.

As the molecular weight of the above-described polymer electrolyte having an acidic group, the optimum range can be determined by its structure and the like, and the polystyrene-reduced number-average molecular weight according to gel permeation chromatography (hereinafter, referred to as "GPC") is preferably 1×10³ to 1×10⁶. The lower limit of this number-average molecular weight is preferably 5×10³, more preferably 1×10⁴, and its upper limit is preferably 8×10⁵, more preferably 5×10⁵.

Next, a method of producing a random copolymer in which aromatic rings constituting the main chain are linked substantially via a direct bonding which is a preferable embodiment will be described, as one example of the production method of the polymer electrolyte having an acidic group.

Here, a production method using a monomer having a sulfonate group is explained as one example.

First, a monomer having a protected sulfonate group such as (2,2-dimethylpropyl) 2,5-dichlorobenzenesulfonate, di(2,2-dimethylpropyl) 4,4'-dichlorobiphenyl-2,2'-disulfonate and the like and a monomer having no sulfonate group such as 2,5-dichlorobenzophenone, 1,3-dichlorobenzene, 9,9-dioctyl-2,7-dibromofluorene and the like are copolymerized at 20 to 80ºC in a solvent such as N-methyl-2-pyrrolidone (NMP) and the like under co-existence of a zero-valent transition metal complex, to obtain a random copolymer in which aromatic rings constituting the main chain are linked substantially via a direct bonding in the state protected by 2,2-dimethylpropyl alcohol. Thus obtained random copolymer is subjected to a de-protecting reaction at a reaction temperature of 100 to 150ºC in the presence of a solvent such as NMP and the like using a deprotecting agent such as lithium bromide and the like, to obtain the intended random copolymer.

Here, a random copolymer having preferable ion exchange capacity is obtained by selecting the copolymerization ratio of a monomer having a protected sulfonate group such as (2,2-dimethylpropyl) 2,5-dichlorobenzenesulfonate, di(2,2-dimethylpropyl) 4,4'-dichlorobiphenyl-2,2'-disulfonate and the like and a monomer having no sulfonate group such as 2,5-dichlorobenzophenone, 1,3-dichlorobenzene, 9,9-dioctyl-2,7-dibromofluorene and the like. For example, in the case of copolymerization of (2,2-dimethylpropyl) 2,5-dichlorobenzenesulfonate and 2,5-dichlorobenzophenone, if the molar ratio of repeating units derived from these compounds is 1.0:0.7, then, the ion exchange capacity is 3.5 and if the molar ratio of repeating units derived from these compounds is 1.0:0.4, then, the ion exchange capacity is 4.5.

When a compound having an acyl group such as 2,5-dichlorobenzophenone and the like is used as the above-described monomer having no sulfonate group, two repeating units having an acyl group may be adjacent, the acyl groups of the two repeating units may be linked, and the linked acyl groups may cause a rearrangement reaction. Linking of acyl groups and occurrence of a rearrangement reaction by the linked acyl groups as described above can be confirmed by measurement of ¹³ C-nuclear magnetic resonance spectrum, and the like.

The above-described zero-valent transition metal complex is obtained by reducing a catalytic amount of a nickel halide with 1 equivalent or more of a compound having a reducing ability such as zinc and the like in a solvent such as NMP and the like in the presence of a compound which can be a ligand such as 2,2'-bipyridyl and the like.

### (Electrolyte membrane)

The above-described electrolyte membrane includes proton conductive electrolyte membranes such as perfluoro polymer electrolyte membranes, hydrocarbon polymer electrolyte membranes, proton conductive inorganic membranes and the like, preferably, perfluoro polymer electrolyte membranes and hydrocarbon polymer electrolyte membranes, more preferably, hydrocarbon polymer electrolyte membranes.

The above-described perfluoro polymer electrolyte membrane includes, for example, Nafion NRE211CS, Nafion NRE212CS, Nafion112, Nafion1135, Nafion115, Nafion117 (all are manufactured by DuPont), Flemion (manufactured by Asahi Glass Co., Ltd.), Aciplex (manufactured by Asahi Kasei Corporation) (all are trade names, (registered trademarks).

The above-described hydrocarbon polymer electrolyte membrane is constituted of a hydrocarbon polymer electrolyte. Here, "hydrocarbon polymer electrolyte" means a polymer electrolyte in which the halogen atom content is 25 wt% or less (preferably 5 wt% or less) in terms of the element mass composition ratio. The hydrocarbon polymer electrolyte includes polymer electrolytes having an acidic group and polymer electrolytes having a basic group, and preferable are polymer electrolytes having an acidic group since its electric generation performance is excellent.

The acidic group which can be obtained in the above-described hydrocarbon polymer electrolyte includes a sulfonate group, a carboxylic group, a phosphonate group, a phosphinate group, a sulfonylimide group, a phenolic hydroxyl group and the like, preferably, a sulfonate group and a phosphonate group, more preferably , a sulfonate group.

The above-described hydrocarbon polymer electrolyte includes
(A') polymer electrolytes having in its main chain an aliphatic hydrocarbon skeleton and having a sulfonate group and/or phosphonate group in its molecule;
(B') polymer electrolytes having in its main chain an aromatic ring and having a sulfonate group and/or phosphonate group in its molecule; and
(C') polymer electrolytes having in its main chain an aliphatic hydrocarbon skeleton and an aromatic ring and having a sulfonate group and/or phosphonate group in its molecule,
and the above-described polymer electrolytes (B') or (C') are preferable since its electric generation performance and durability are excellent.

The above-described polymer electrolyte (A') includes, for example, polyvinylsulfonic acid, polystyrenesulfonic acid and poly(α-methylstyrene)sulfonic acid.

The above-described polymer electrolyte (B') may be a compound in which the main chain is interrupted by a hetero atom such as an oxygen atom and the like, and examples thereof include polyether ether ketone, polysulfone, poly ethersulfone, poly(arylene ether), polyimide, poly((4-phenoxybenzoyl)-1,4-phenylene), polyphenylene sulfide, polyphenylquinoxaline, sulfoarylated polybenzimidazole, sulfoalkylated polybenzimidazole, phosphoalkylated polybenzimidazole and phosphonated poly(phenylene ether). Such polymer electrolytes are described also in JP-A No. 9-110982, J. Appl. Polym. Sci., 18, 1969 (1974).

The above-described polymer electrolyte (C') include, for example, random copolymers having a sulfonate group and/or phosphonate group, alternate copolymers having a sulfonate group and/or phosphonate group, and block copolymers having a sulfonate group and/or phosphonate group.

of the above-described hydrocarbon polymer electrolytes, aromatic hydrocarbon polymer electrolytes are preferable since its heat resistance is excellent and recycling thereof is easy. The aromatic hydrocarbon polymer electrolyte includes, for example, polymer compounds having in its main chain an aromatic hydrocarbon skeleton and having an acidic group in its molecule. The above-described aromatic hydrocarbon polymer electrolyte is preferably a solvent-soluble compound, and in the case of a solvent-soluble compound, an electrolyte membrane having desired thickness is easily obtained by a known solution casting method.

In the above-described aromatic hydrocarbon polymer electrolyte, the above-described acidic group may be directly linked to or linked via a linking group to an aromatic hydrocarbon skeleton, and when a plurality of the above-described acidic groups are present, these may be linked directly or linked via a linking group.

The above-described polymer compound having in its main chain an aromatic hydrocarbon skeleton and having an acidic group in its molecule includes, for example, polymer compounds in which the main chain is composed of several di-valent aromatic hydrocarbon groups and an acidic group is present at at least one position selected from the main chain, side chain and end position, and polymer compounds in which several di-valent aromatic groups are linked via a main chain linking group in the main chain, and an acidic group is present at at least one position selected from the main chain, side chain and end position,

The above-described main chain linking group includes -O-, -S-, -C(=O)-, -S(=O)-, -S(=O)₂-, a C1-4 alkylene group, a C1-4 fluorine-substituted alkylene group, a C2-4 alkenylene group and a C2-4 alkynylene group.

The above-described di-valent aromatic hydrocarbon group includes a phenylene group, a naphthalene group, an anthracenylene group, a fluorenediyl group and the like.

A hydrogen atom in the above-described polymer compound having in its main chain an aromatic hydrocarbon skeleton and having an acidic group in its molecule may be substituted by a C1-20 alkyl group, a C1-20 alkoxy group, a C6-20 aryl group, a C6-20 aryloxy group, a nitro group or a halogeno group. When a hydrogen atom in the above-described polymer compound having in its main chain an aromatic hydrocarbon skeleton and having an acidic group in its molecule is substituted by a halogeno group and when the above-described polymer compound having in its main chain an aromatic hydrocarbon skeleton and having an acidic group in its molecule has a fluorine-substituted alkylene group as the above-described main chain linking group, the aromatic hydrocarbon polymer electrolyte has a halogen atom content of preferably 25 wt% or less, more preferably 5 wt% or less, in terms of the element mass composition ratio.

As the above-described aromatic hydrocarbon polymer electrolyte, preferable are polymer compounds which give a membrane having a domain having an acidic group contributing to proton conductivity and a domain having substantially no acidic group contributing to mechanical strength (namely, phase-separated membrane) when processed into a membrane, and of them, polymer compounds which give a micro-phase-separated membrane are more preferable.

Here, the micro-phase-separated membrane means, for example, a membrane having a structure in which a fine phase in which a density of the block (A) having an acidic group is high (micro domain) and a fine phase in which the density of the block (B) having substantially no acidic group (micro domain) are present in mixed state and the domain width of each micro domain structure (that is, identity period) is several nm to several hundred nm, when observed by a transmission electron microscope (TEM). As this micro-phase-separated membrane, membranes having a micro domain structure of 5 to 100 nm are mentioned. The aromatic hydrocarbon polymer electrolyte from which a membrane having the above-described micro-phase-separated structure is easily obtained includes block copolymers having a block having an acidic group and a block having substantially no acidic group and graft copolymers having a block having an acidic group and a block having substantially no acidic group, and block copolymers having a block having an acidic group and a block having substantially no acidic group are preferable, since microscopic phase separation in the order of the molecule chain size tends to occur since different polymer blocks are linked by a chemical bond in these block copolymers and graft copolymers.

The above-described block having an acidic group means a block in which the number of acidic groups is 0.5 or more on average per repeating unit constituting the block. In contrast, the above-described block having substantially no acidic group means a block in which the number of acidic groups is less than 0.5 on average per repeating unit constituting the block.

As the above-described block copolymer having a block having an acidic group and a block having substantially no acidic group, the following copolymers are particularly preferable. Further, compounds obtained by replacing a sulfonate group in these copolymers by other acidic group are also preferable likewise. In the formulae, "block" means that the following compounds are block copolymers constituted of one or more of two blocks (left structure of block and right structure of block)(the same shall apply hereinafter). 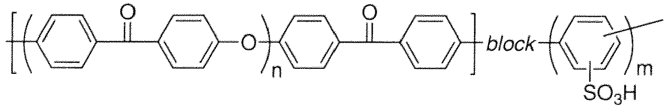 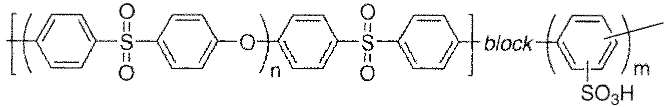 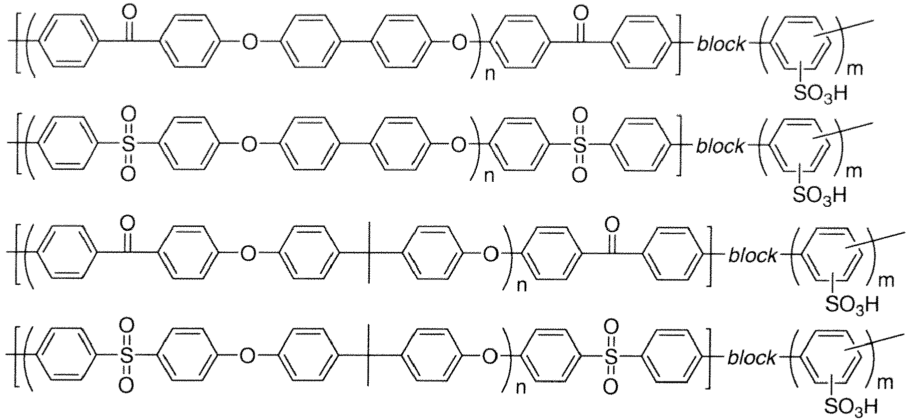 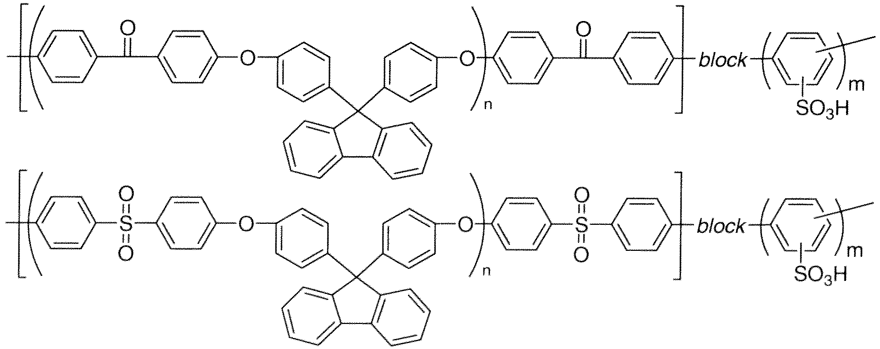 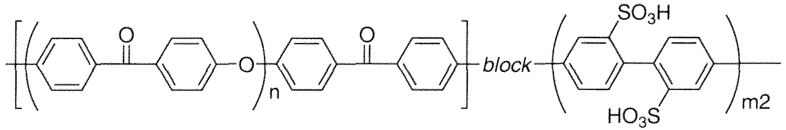 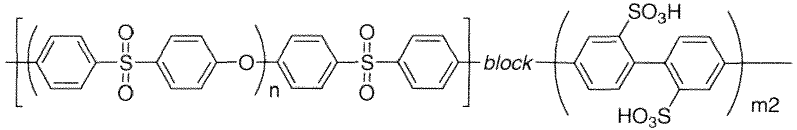 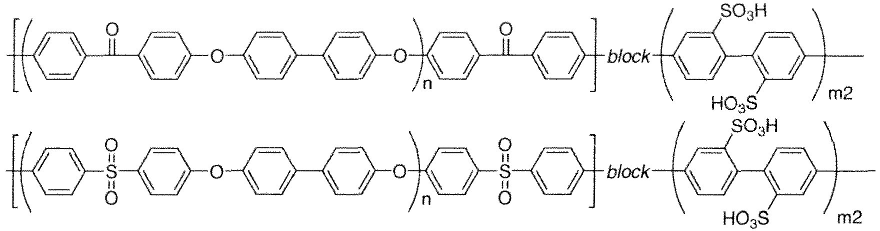 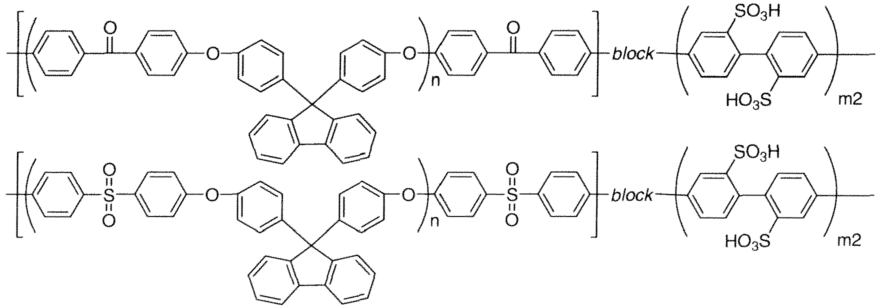 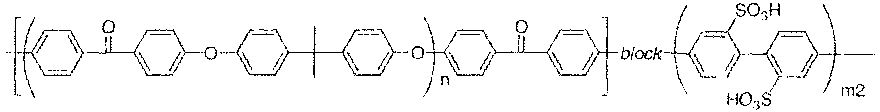 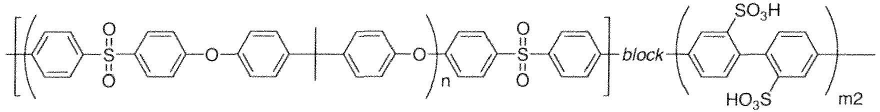 (wherein, n, m and m2 represent each independently an integer of 3 or more)

The molecular weight of the above-described hydrocarbon polymer electrolyte is usually 1×10³ to 1×10⁶ in terms of polystyrene-reduced number-average molecular weight by a GPC method, and its lower limit is preferably 5×10³, more preferably 1×10⁴ and its upper limit is preferably 5×10⁵, more preferably 3×10⁵.

When the catalyst layer containing a non-precious metal electrode catalyst and an ionomer having an ion exchange capacity of 1.2 meq/g or more contains further a carbon carrier and when the weight ratio of the ionomer with respect to the weight of the above-described carbon carrier is more than 0 and 1.0 or less in the membrane-electrode assembly of the present invention, a larger amount of a three-phase interface necessary for the action of an electrode catalyst can be formed in the catalyst layer as a preferable phenomenon, and its lower limit is more preferably 0.05, further preferably 0.10, particularly preferably 0.15 and its upper limit is more preferably 0.85, further preferably 0.70, particularly preferably 0.55.

The electrolyte membrane used in the membrane-electrode assembly of the present invention may contain, in addition to the above-described electrolyte, other components in a range not remarkably deteriorating proton conductivity according to a desired property. The other components include additives such as a plasticizer, a stabilizer, a mold releasing agent, a water retention agent and the like used in usual polymer compounds.

When the membrane-electrode assembly of the present invention is used in a fuel battery described later, it is preferable to add a stabilizer which is capable of imparting oxidation resistance and antiradical property to the above-described electrolyte since the durability of the electrolyte is excellent. Examples of the stabilizer include low molecular weight compounds such as phenol compounds such as 4,4'-butylidenebis(2-tert-butyl-5-methylphenol) (manufactured by Sumitomo Chemical Co., Ltd., trade name: Sumilizer BBM-S) and the like, phosphorus atom-containing compounds such as 2,4,8,10-tetra-tert-butyl-6-[3-(3-methyl-4-hydroxy-5-tert-butylphenyl)propoxy]dibenzo[d,f][1,3,2]di oxaphosphepine (manufactured by Sumitomo Chemical Co., Ltd., trade name: Sumilizer GP) and the like, sulfur atom-containing compounds such as pentaerythrityl-tetrakis(3-dodecylthiopropionate) (manufactured by Sumitomo Chemical Co., Ltd., trade name: Sumilizer TP-D) and the like, etc., and polymer compounds having the hydroxyl group and the phosphorus atom-containing group in these lower molecular weight compounds. Of them, aromatic polymer phosphonic acids in which a phosphonate group is linked to an aromatic ring (see, e.g., JP-A No. 2003-238678, JP-A No. 2003-282096) are preferable.

When the above-described additive is used, its addition amount is preferably 0.1 to 50 parts by weight when the amount of the electrolyte is 100 parts by weight, for fully exerting the effect of the additive.

As the method of producing the above-described electrolyte membrane, a method in which a solution containing the above-described electrolyte, additives added if necessary, and the like is used and this is formed into a film and a method in which this is combined with a supporting material to give an electrolyte composite membrane are preferable.

For the purpose of improving the mechanical strength of the above-described electrolyte membrane, the electrolyte can be combined with a supporting material and used as a composite membrane. The above-described supporting material includes fibril-formed base materials, porous membrane-formed base materials and the like.

Since if the above-described electrolyte membrane is used for production of a fuel battery, the resistance of the resultant fuel battery can be lowered, the upper limit of its thickness is preferably 200 µm, more preferably 170 µm, particularly preferably 140 µm and the lower limit of its thickness is preferably 1 µm, more preferably 3 µm, particularly preferably 5 µm.

### [Fuel battery]

Next, a preferable one embodiment of the fuel battery equipped with the membrane-electrode assembly of the present invention will be illustrated referring to the appended drawing.

Fig. 1 is a longitudinal sectional view of a cell of a fuel battery according to a suitable one embodiment of the present invention. In Fig. 1, a fuel battery cell 10 has a membrane-electrode assembly 20 constituted of an electrolyte membrane 12 (proton conductive membrane) and a pair of catalyst layers 14a and 14b sandwiching the membrane. The fuel battery cell 10 has gas diffusion layers 16a and 16b and separators 18a and 18b (it is preferable that grooves (not shown) as a flow route of a fuel gas and the like are formed on separators 18a and 18b on the sides of catalyst layers 14a and 14b) in this order, sandwiching the both sides of the membrane-electrode assembly 20. A structure composed of the electrolyte membrane 12, the catalyst layers 14a and 14b and the gas diffusion layers 16a and 16b is generally called a membrane-electrode-gas diffusion layer assembly (MEGA) in some cases.

The catalyst layers 14a and 14b are a layer functioning as the electrode layer in the fuel battery, and one of them is an anode electrode layer and the other is a cathode electrode layer. At least one of the catalyst layerl4a and 14b contains a non-precious metal electrode catalyst and an ionomer having an ion exchange capacity of 1.2 meq/g or more, as described above.

The gas diffusion layers 16a and 16b are a layer having a function of promoting diffusion of a raw material gas into the catalyst layers 14a and 14b. It is preferable that the gas diffusion layers 16a and 16b are constituted of a porous material having electric conductivity. As the above-described porous material, porous carbon non-woven fabric and carbon paper are preferable since they can transport a raw material gas to the catalyst layers 14a and 14b efficiently.

The separators 18a and 18b are formed of a material having electric conductivity. Examples of the above-described material having electric conductivity include carbon, resin mold carbon, titanium and stainless steel.

Next, a suitable method of producing the fuel battery cell 10 will be illustrated.

First, a non-precious metal electrode catalyst and a solution containing an ionomer are mixed to form a slurry. This is coated on carbon non-woven fabric or carbon paper by a spray method or a screen printing method, and the solvent and the like are vaporized, thereby obtaining laminates having the catalyst layers 14a and 14b formed on the gas diffusion layers 16a and 16b. The resultant pair of laminates are arranged so that the catalyst layers face, and the electrolyte membrane 12 is disposed between them, and these are clamped under pressure, to obtain MEGA. This MEGA is sandwiched by the pair of separators 18a and 18b, and these were bonded to obtain the fuel battery cell 10. This fuel battery cell 10 can also be sealed by gas seal and the like.

Formation of the catalyst layers 14a and 14b on the gas diffusion layers 16a and 16b can also be carried out, for example, by coating the above-described slurry on a base material such as polyimide, poly(tetrafluoroethylene) and the like, drying this to form a catalyst layer, then, transferring this to the gas diffusion layer by hot press.

The fuel battery cell 10 is a minimum unit of a solid polymer-type fuel battery and the output power of a single fuel battery cell 10 is limited. Thus, it is preferable that several fuel battery cells 10 are serially connected to give a fusel cell stack so as to obtain necessary output power.

The fuel battery of the present invention can be acted as a solid polymer-type fuel battery when the fuel is hydrogen and can be acted as a direct methanol-type fuel battery when the fuel is methanol.

The fuel battery of the present invention is useful, for example, as an automobile electric power source, a domestic electric power source, or a compact electric power source for mobile instruments such as cellular telephones, mobile personal computers and the like.

### EXAMPLES

The present invention will be illustrated based on examples below, but the present invention is not limited to the examples.

### <Calculation of ion exchange capacity>

A sample (ionomer, polymer electrolyte and the like) was subjected to a solution casting method to form a sample membrane, and the sample membrane was cut into prescribed size. The dry weight of the cut sample membrane was measured using a halogen moisture meter having a heating temperature set at 105ºC. Next, thus dried sample membrane was immersed in 5 mL of a 0.1 mol/L sodium hydroxide aqueous solution, then, 50 mL of ion exchange water was further added, and the solution was left for 2 hours. Thereafter, titration was carried out by gradually adding 0.1 mol/L hydrochloric acid to the solution immersing the sample membrane, thereby deciding the neutralization point. Then, the ion exchange capacity (unit: meq/g) of the sample was calculated from the dry weight of the cut sample membrane and the amount of hydrochloric acid required for neutralization.

### <Examples 1>

### ·Preparation of metal complex (A)

A metal complex (A) was prepared by the following method. 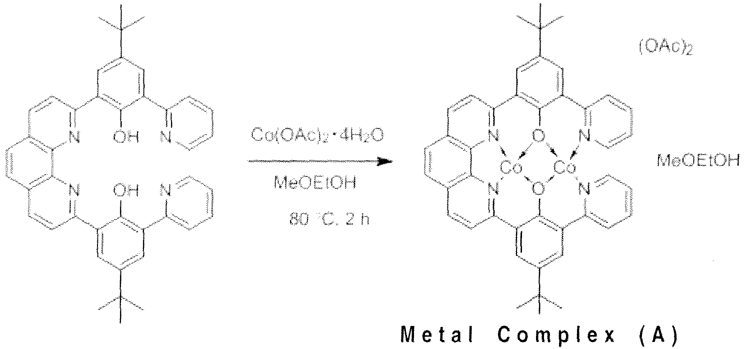 (wherein, Me represents a methyl group, Et represents an ethyl group and Ac represents an acetyl group.)

The ligand compound as a raw material was synthesized according to a method described in "Tetrahedron", Vol. 55, p. 8377 (1999).

Then, under a nitrogen atmosphere, 200 ml of a 2-methoxyethanol solution containing 1.388 g of the ligand compound and 1.245 g of cobalt acetate tetrahydrate was charged in a 500 ml recovery flask (eggplant flask), and stirred for 2 hours while heating at 80°C, to generate a brown solid. This brown solid was collected by filtration, washed with 20 ml of 2-methoxyethanol, then, dried to obtain a metal complex (A) (yielded amount: 1.532 g, yield: 74%). In the metal complex (A) in the above-described reaction formula, "(OAc)₂" shows that 2 equivalent of an acetate ion is present as a counter ion and "MeOEtOH" shows that a 2-methoxyethanol molecule is present as a ligand.
Element analysis value (%): as C₄₉H₅₀CO₂N₄O₈
(calculated) C: 62.56, H: 5.36, N: 5.96, Co: 12.53
(measured) C: 62.12, H: 5.07, N: 6.03, Co: 12.74

### ·Preparation of non-precious metal electrode catalyst (A)

The metal complex (A), benzimidazole and a carbon carrier (trade name: Ketjen Black EC600JD, manufactured by Lion Corporation) were mixed at a weight ratio of 1:1:4, and stirred for 15 minutes in ethanol at room temperature, then, dried for 12 hours at room temperature under a reduced pressure of 200 Pa. The resultant mixture was heated at 800ºC for 2 hours under a nitrogen flow of 200 ml/min using a tubular furnace having a furnace core tube made of quartz, to obtain a non-precious metal electrode catalyst (A).

### · Production of ionomer (A)

In a flask under an argon atmosphere, 20.1 g (92.0 mmol) of anhydrous nickel bromide and 220 g of NMP were mixed, the inner temperature was elevated to 70ºC and the mixture was stirred for 1 hour. The resultant mixture was cooled down to 60ºC, then, 15.8 g (101.2 mmol) of 2,2'-bipyridyl was added to this, and the mixture was stirred at the same temperature for 30 minutes, to prepare a nickel-containing solution (A).

In a flask under an argon atmosphere, 20.0 g (67.3 mmol) of (2,2-dimethylpropyl) 2,5-dichlorobenzenesulfonate and 6.2 g (24.7 mmol) of 2,5-dichlorobenzophenone were charged, and dissolved in 150 g of NMP, then, and the temperature in the flask was adjusted to 50ºC. To the resultant solution was added 12.0 g (183.9 mmol) of a zinc powder, the above-described nickel-containing solution (A) was poured into this, then, the mixture was heated up to 65ºC and subjected to a polymerization reaction for 5 hours, to obtain a black polymerized solution.

This polymerized solution was dropped into 900 g of a 8N nitric acid aqueous solution under room temperature, and stirred for 30 minutes, to find deposition of a coarse polymer. This coarse polymer was filtrated, washed with water until pH of the filtrate rose beyond 4, then, further washed using a large amount of methanol, to obtain 19.1 g of a polymer (A) having a sulfonic acid precursor group ((2,2-dimethylpropyl) sulfonate group).

Next, the sulfonic acid precursor group was converted into a sulfonate group as described below.

The above-described polymer (A) (18.5 g) having the sulfonic acid precursor group was charged in a flask, and a gas in this flask was purged with argon sufficiently. Then, 2.4 g of waster, 11.7 g (134.7 mmol) of anhydrous lithium bromide and 350 g of NMP were added to this, and the polymer (A) having the sulfonic acid precursor group was fully dissolved, then, the solution was heated up to 120ºC, and a conversion reaction into a sulfonate group was carried out at the same temperature for 12 hours, to obtain a polymer solution. This polymer solution was dropped into 900 g of 6N hydrochloric acid, and the mixture was stirred for 1 hour, to find deposition of a coarse polymer. This coarse polymer was filtrated, and washed several times with a large amount of a hydrochloric acid methanol solution, washed with water until pH of the filtrate rose beyond 4, then, dried, to obtain an ionomer (A). The yielded amount of this ionomer (A) was 13.0 g. The ionomer (A) had a polystyrene-reduced number-average molecular weight Mn of 1.6×10⁵ and a polystyrene-reduced weight-average molecular weight Mw of 4.0×10⁵ and had an ion exchange capacity of 4.2 meq/g.

### ·Preparation of cathode catalyst ink (A)

To a solution prepared by dissolving 0.024 g of the ionomer (A) in 5.5 ml of ethanol were added 0.1 g of the non-precious metal electrode catalyst (A) and 0.6 ml of water, The resultant mixture was treated with an ultrasonic wave for 1 hour, then, stirred for 5 hours by a stirrer to obtain a cathode catalyst ink (A) .

### ·Preparation of anode catalyst ink (A)

To 1.0 g of a platinum-supporting carbon (manufactured by ElectroChem, Inc.) supporting 20 wt% platinum was added 6.4 mL of water, then, 4.8 g of a 5 wt% Nafion (registered trademark) solution (solvent: a mixture of water and lower alcohol, manufactured by Aldrich, product serial number: 274704) was dropped, and 55.0 mL of ethanol was added. The resultant mixture was treated with an ultrasonic wave for 1 hour, then, stirred for 5 hours by a stirrer, to obtain an anode catalyst ink (A).

### · Production of hydrocarbon polymer electrolyte membrane (A)

A hydrocarbon polymer electrolyte (A) represented by the following formula (the polystyrene-reduced number-average molecular weight was 1.2×10⁵ and the polystyrene-reduced weight-average molecular weight was 2.3×10⁵) was obtained according to a method described in Example 1 of International Publication WO 2006/095919 pamphlet. The hydrocarbon polymer electrolyte (A) had an ion exchange capacity of 2.2 meq/g. 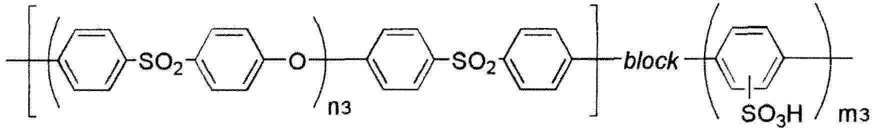 (wherein, m3 and n3 represent numbers satisfying the above-described molecular weight)

In the presence of potassium carbonate, 4,4'-dihydroxydiphenylsulfone, 4,4'-dihydroxybiphenyl and 4,4'-dichlorodiphenylsulfone were reacted at a molar ratio of 4:6:10 using diphenylsulfone as a solvent, to synthesize a random copolymer represented by the following formula. 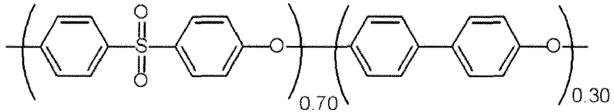 (wherein, numerals appended to parentheses represent the molar ratio of repeating units)

Then, this random copolymer was subjected to bromination and phosphorylation according to a method described in JP-A No. 2003-282096, then, hydrolyzed to obtain an additive 1 having a structure containing about 0.2 bromine atoms and about 1.7 phosphonate groups per unit derived from the biphenol structure.

A mixture prepared by mixing the hydrocarbon polymer electrolyte (A) and the additive 1 at a weight ratio of 9:1 was dissolved in dimethyl sulfoxide so as to give a concentration of about 15 wt%, thereby preparing a hydrocarbon polymer electrolyte (A) solution. This hydrocarbon polymer electrolyte (A) solution was dropped onto a glass plate. Then, the hydrocarbon polymer electrolyte (A) solution was coated and spread uniformly on the glass plate using a wire coater. In this procedure, the coating thickness was controlled by varying the clearance of the wire coater. Thereafter, the hydrocarbon polymer electrolyte (A) solution was dried at 80ºC under normal pressure and peeled from the glass plate, obtaining a membrane. This membrane was immersed in 1N hydrochloric acid, then, washed with ion exchange water, and dried at ambient temperature, to obtain a hydrocarbon polymer electrolyte membrane (A) having a thickness of 20 µm.

### · Fabrication of membrane-electrode assembly (A)

According to a method described in JP-A No. 2004-089976, the cathode catalyst ink (A) and the anode catalyst ink (A) were spray-coated on the hydrocarbon polymer electrolyte membrane (A).

Specifically, the cathode catalyst ink (A) was coated by a spray method on a region of 3 cm square at the center of the one surface of the hydrocarbon polymer electrolyte membrane (A) cut into 5 cm square. In this procedure, the distance from the discharge port to the membrane was set to 6 cm and the stage temperature was set at 80ºC. Recoating was performed so as to obtain the intended unit weight, then, left for 15 minutes on the stage to remove the solvent, thereby forming a 1.79 mg/cm² cathode catalyst layer containing the non-precious metal electrode catalyst (A) and the ionomer (A) on the hydrocarbon polymer electrolyte membrane (A). Similarly, the anode catalyst ink (A) was spray-coated on the opposite surface of the hydrocarbon polymer electrolyte membrane (A), thereby forming a 1.92 mg/cm² anode catalysts layer containing the platinum-supporting carbon and Nafion (registered trademark) on the hydrocarbon polymer electrolyte membrane (A), to obtain a membrane-electrode assembly (A).

### · fabrication of fuel battery cell (A) and evaluation of its electric generation performance

On the both sides of the above-described membrane-electrode assembly (A), a carbon cloth cut into 3 cm square and a separator made of carbon on which a groove for a gas pathway had been cut were placed, and on the outside thereof, an electrical power collector and an end plate were placed in this order, and these were fastened by a bolt, to fabricate a fuel battery cell (A) having an effective membrane area of 9 cm².

While keeping this fuel battery cell (A) at 80ºC, humidified hydrogen was fed to the anode and humidified air was fed to the cathode. In this procedure, the back pressure at the gas outlet port of the cell was adjusted to 0.1 MPaG. Humidification of each fuel gas was performed by passing the gas through a bubbler, and the water temperature of the hydrogen bubbler was set at 80ºC and the water temperature of the air bubbler was set to 80ºC. Here, the flow rate of hydrogen was adjusted to 529 ml/min and the flow rate of air was adjusted to 1665 ml/min. In this case, the fuel battery cell (A) had a current density at 0.4 V of 0.427 A/cm² .

### <Examples 2>

### · production of ionomer (B)

In a flask under an argon atmosphere, 14.6 g (66.7 mmol) of anhydrous nickel bromide and 180 g of NMP were mixed, the inner temperature was elevated up to 70ºC and the mixture was stirred for 1 hour. The resultant mixture was cooled to 60ºC, 11.5 g (73.5 mmol) of 2,2'-bipyridyl was added, and the mixture was cooled to 40ºC while stirring, to prepare a nickel-containing solution (B).

In a flask under an argon atmosphere, 20.0 g (38.2 mmol) of di(2,2-dimethylpropyl) 4,4 '-dichlorobiphenyl-2,2'-disulfonate and 7.2 g (28.7 mmol) of 2,5-dichlorobenzophenone were charged, and dissolved in 380 g of NMP, then, The temperature in the flask was adjusted to 50ºC. To the resultant solution was added 8.7 g (133.7 mmol) of a zinc powder, and the mixture was cooled to 40ºC while stirring. The above-described nickel-containing solution (B) was poured into this, and the mixture was subjected to a polymerization reaction for 5 hours while keeping the temperature at 40ºC, to obtain a black polymerized solution.

This polymerized solution was dropped into 2000 g of a 6N hydrochloric acid aqueous solution under room temperature, and the mixture was stirred for 30 minutes, to obtain a coarse polymer. This coarse polymer was filtrated, washed with water until pH of the filtrate rose beyond 4, then, further washed using a large amount of methanol, to obtain 22.5 g of a polymer (B) having a sulfonic acid precursor group ((2,2-dimethylpropyl) sulfonate group).

Next, the sulfonic acid precursor group was converted into a sulfonate group as described below.

The above-described polymer (B) (21.0 g) having the sulfonic acid precursor group was charged in a flask, and a gas in this flask was purged with argon sufficiently. Then, 54.6 g of water, 13.3 g (134.7 mmol) of anhydrous lithium bromide and 500 g of NMP were added to this, and the polymer (B) having the sulfonic acid precursor group was fully dissolved, then, the solution was heated up to 120ºC and a conversion reaction to a sulfonate group was carried out at the same temperature for 12 hours, to obtain a polymer solution.

This polymer solution was dropped into 2100 g of 6N hydrochloric acid, and the mixture was stirred for 1 hour, to obtain a coarse polymers. This coarse polymer was filtrated, washed several times with a large amount of a hydrochloric acid methanol solution, washed with water until pH of the filtrate rose beyond 4, then, dried, to obtain an ionomer (B). The yielded amount of this ionomer (B) was 16.3 g. The ionomer (B) had a polystyrene-reduced number -average molecular weight Mn of 3.2×10⁵ and a polystyrene-reduced weight-average molecular weight Mw of 7.7×10⁵ and had an ion exchange capacity of 4.3 meq/g.

### · Preparation of cathode catalyst ink (B)

A solution prepared by dissolving 0.024 g of the ionomer (B) in 5.5mL of ethanol was added to a mixture of 0.10 g of the non-precious metal electrode catalyst (A) and 0.6 mL of water, the resultant mixture was treated with an ultrasonic wave for 1 hour, then, stirred for 5 hours by a stirrer to obtain a cathode catalyst ink (B).

### · Fabrication of membrane-electrode assembly (B)

A membrane-electrode assembly (B) was fabricated in the same manner as in Example 1 excepting that the cathode catalyst ink (B) was used instead of the cathode catalyst ink (A) in Example 1. On the cathode side of the membrane-electrode assembly (B), a 1.86 mg/cm² cathode catalyst layer containing the non-precious metal electrode catalyst (A) and the ionomer (B) was formed, and on the anode side thereof, a 2.11 mg/cm² anode catalyst layer containing the platinum-supporting carbon and Nafion (registered trademark) was formed.

### · Fabrication of fuel battery cell (B) and evaluation of its electric generation performance

A fuel battery cell (B) was fabricated in the same manner as in Example 1 excepting that the membrane-electrode assembly (B) was used instead of the membrane-electrode assembly (A) in Example 1, and this was evaluated. The fuel battery cell (B) had a current density at 0.4 V of 0.627 A/cm².

### <Example 3>

### · production of non-precious metal electrode catalyst (B)

The metal complex (A), benzimidazole and a carbon carrier (trade name: Black Pearls 2000, manufactured by Cabot) were mixed at a weight ratio of 1:1: 4, and the mixture was stirred at room temperature for 15 minutes in ethanol, then, dried for 12 hours at room temperature under a reduced pressure of 200 Pa. The resultant mixture was heated at 800ºC for 2 hours under a nitrogen flow of 200 ml/min using a tubular furnace having a furnace core tube made of quartz, to obtain a non-precious metal electrode catalyst (B).

### · Production of ionomer (C)

In a flask under an argon atmosphere, 15.2 g (69.6 mmol) of anhydrous nickel bromide and 180 g of NMP were mixed, the inner temperature was elevated up to 70ºC and the mixture was stirred for 1 hour. The resultant mixture was cooled to 60ºC, 12.0 g (76.5 mmol) of 2,2'-bipyridyl was added, and the mixture was cooled down to 30ºC while shirring, to prepare a nickel-containing solution (C).

In a flask under an argon atmosphere, 22.0 g (42.0 mmol) of di(2,2-dimethylpropyl) 4,4'-dichlorobiphenyl-2,2'-disulfonate, 6.9 g (27.6 mmol) of 2,5-dichlorobenzophenone and 1.1 g (7.7 mmol) of 1,3-dichlorobenzene were charged, and dissolved in 390 g of MMP, then, the temperature in the flask was adjusted to 50ºC. To the resultant solution was added 9.0 g (139.2 mmol) of a zinc powder, and the mixture was cooled down to 30ºC while stirring. The above-described nickel-containing solution (C) was poured into this, and the mixture was subjected to a polymerization reaction for 10 hours while keeping the temperature at 30ºC, to obtain a black polymerized solution.

This polymerized solution was dropped into 2000 g of a 6N hydrochloric acid aqueous solution under room temperature, and the mixture was stirred for 30 minutes, to obtain a coarse polymer. This coarse polymer was filtrated, washed with water until pH of the filtrate rose beyond 4, then, further washed with a large amount of methanol, to obtain 24.1 g of a polymer (C) having a sulfonic acid precursor group ((2,2-dimethylpropyl) sulfonate group).

Next, the sulfonic acid precursor group was converted into a sulfonate group as described below.

The above-described polymer (C) (23.8 g) having the sulfonic acid precursor group was charged in a flask, and a gas in this flask was purged with argon sufficiently. Then, 30.0 g of water, 14.6 g (168.1 mmol) of anhydrous lithium bromide and 570 g of NMP were added to this, the polymer (C) having the sulfonic acid precursor group was fully dissolved, then, the solution was heated up to 120ºC and a conversion reaction to a sulfonate group was carried out at the same temperature for 12 hours, to obtain a polymer solution.

This polymer solution was dropped into 2000 g of 6mol/L hydrochloric acid, and the mixture was stirred for 1 hour, to obtain a coarse polymers. This coarse polymer was filtrated, washed several times with a large amount of a hydrochloric acid methanol solution, washed with water until pH of the filtrate rose beyond 4, then, dried, to obtain an ionomer (C). The yielded amount of this ionomer (C) was 18.0 g. The ionomer (C) had a polystyrene-reduced number-average molecular weight Mn of 3.4×10⁵ and a polystyrene-reduced weight-average molecular weight Mw of 8.9×10⁵ and had an ion exchange capacity of 4.3 meq/g.

### · Preparation of cathode catalyst ink (C)

A solution prepared by dissolving 0.024 g of ionomer (C) in 5.5mL of ethanol was added to a mixture of 0.10 g of the non-precious metal electrode catalyst (B) and 0.6 mL of water, and the resultant mixture was treated with an ultrasonic wave for 1 hour, then, stirred for 5 hours by a stirrer, to obtain a cathode catalyst ink (C).

### · fabrication of membrane-electrode assembly (C)

A membrane-electrode assembly (C) was fabricated in the same manner as in Example 1 excepting that the cathode catalyst ink (C) was used instead of the cathode catalyst ink (A) in Example 1. On the cathode side of the membrane-electrode assembly (C), a 1.77 mg/cm² cathode catalyst layer containing the non-precious metal electrode catalyst (B) and the ionomer (C) was formed, and on the anode side thereof, a 1.92 mg/cm² anode catalyst layer containing the platinum-supporting carbon and Nafion (registered trademark) was formed.

### · Fabrication of fuel battery cell (C) and evaluation of its electric generation performance

A fuel battery cell (C) was fabricated in the same manner as in Example 1 excepting that the membrane-electrode assembly (C) was used instead of the membrane-electrode assembly (A) in Example 1, and this was evaluated. The fuel battery cell (C) had a current density at 0.4 V of 0.554 A/cm².

### <Examples 4 >

### · Production of non-precious metal electrode catalyst (C)

The metal complex (A), benzimidazole and a carbon carrier (trade name: Multi Mall Carbon Nanotube, product code: 659258, manufactured by Aldrich) were mixed at a weight ratio of 1:1:4, and the mixture was stirred at room temperature for 15 minutes in ethanol, then, dried for 12 hours at room temperature under a reduced pressure of 200 Pa. The resultant mixture was heated at 800ºC for 2 hours under a nitrogen flow of 200 ml/min using a tubular furnace having a furnace core tube made of quartz, to obtain a non-precious metal electrode catalyst (C).

### · Preparation of cathode catalyst ink (D)

A solution prepared by dissolving 0.024 g of the ionomer (C) in 5.5 mL of ethanol was added to a mixture of 0.10 g of the non-precious metal electrode catalyst (C) and 0.6 my of water, and the resultant mixture was treated with an ultrasonic wave for 1 hour, then, stirred four 5 hours by a stirrer, to obtain a cathode catalyst ink (D).

### · Fabrication of membrane-electrode assembly (D)

A membrane-electrode assembly (D) was fabricated in the same manner as in Example 1 excepting that the cathode catalyst ink (D) was used instead of the cathode catalyst ink (A) in Example 1. On the cathode side of the membrane-electrode assembly (D), a 1.83 mg/cm² cathode catalyst layer containing the non-precious metal electrode catalyst (C) and the ionomer (C) was formed, and on the anode side thereof, a 1.73 mg/cm² anode catalyst layer containing the platinum-supporting carbon and Nafion (registered trademark) was formed.

### · Fabrication of fuel battery cell (D) and evaluation of its electric generation performance

A fuel battery cell (E) was fabricated in the same manner as in Example 1 excepting that the membrane-electrode assembly (D) was used instead of the membrane-electrode assembly (A) in Example 1, and this was evaluated. The fuel battery cell (D) had a current density at 0.4 V of 0.075 A/cm².

### <Example 5>

### · Production of non-precious metal electrode catalyst (D)

The metal complex (A) and a carbon carrier (trade name: Polypyrrole-supporting Carbon Black, product code: 530573, manufactured by Aldrich) were mixed at a weight ratio of 1:4, and the mixture was stirred at room temperature for 15 minutes in ethanol, then, dried for 12 hours at room temperature under a reduced pressure of 200 Pa. The resultant mixture was heated at 800ºC for 2 hours under a nitrogen flow of 200 ml/min using a tubular furnace having a furnace core tube made of quartz, to obtain a non-precious metal electrode catalyst (D).

### · Preparation of cathode catalyst ink (E)

A solution prepared by dissolving 0.024 g of the monomer (C) in 5.5mL of ethanol was added to a mixture of 0.10g of the non-precious metal electrode catalyst (D) and 0.6 mL of water, and the resultant mixture was treated with an ultrasonic wave for 1 hour, then, stirred for 5 hours by a stirrer, to obtain a cathode catalyst ink (E).

### · Fabrication of membrane-electrode assembly (E)

A membrane-electrode assembly (E) was fabricated in the same manner as in Example 1 excepting that the cathode catalyst ink (E) was used instead of the cathode catalyst ink (A) in Example 1. On the cathode side of the membrane-electrode assembly (E), a 1.78mg/cm² cathode catalyst layer containing the non-precious metal electrode catalyst (D) and the ionomer (C) was formed, and on the anode side thereof, a 1.74mg/cm² anode catalyst layer containing the platinum-supporting carbon and Notion (registered trademark) was formed.

### · Fabrication of fuel battery cell (E) and evaluation of its electric generation performance

A fuel battery cell (E) was fabricated in the same manner as in Example 1 excepting that the membrane-electrode assembly (E) was used instead of the membrane-electrode assembly (A) in Example 1, and this was evaluated. The fuel battery cell (E) had a current density at 0.4 V of 0.201 A/cm².

### <Example 6>

### · Production of non-precious metal electrode catalyst (E)

Cobalt acetate tetrahydrate (50 mg), iron acetate (50 mg), benzimidazole (200 mg), a carbon carrier (400 mg, trade name: Ketjen Black EC600JD, manufactured by Lion Corporation) and the ligand compound (200 mg) used in Example 1 were mixed, the mixture was stirred at room temperature for 15 minutes in ethanol, then, dried for 12 hours at room temperature under a reduced pressure of 200 Pa. The resultant mixture was heated at 800ºC for 2 hours under a nitrogen flow of 200 ml/min using a tubular furnace having a furnace core tube made of quartz, to obtain a non-precious metal electrode catalyst (E).

### · Preparation of cathode catalyst ink (F)

A solution prepared by dissolving 0.024 g of the ionomer (C) in 5.5 mL of ethanol was added to a mixture of 0.10 g of the non-precious metal electrode catalyst (E) and 0.6 mL of water, and the resultant mixture was treated with an ultrasonic wave for 1 hour, then, stirred for 5 hours by a stirrer, to obtain a cathode catalyst ink (F).

### · Fabrication of membrane-electrode assembly (F)

A membrane-electrode assembly (F) was fabricated in the same manner as in Example 1 excepting that the cathode catalyst ink (F) was used instead of the cathode catalyst ink (A) in Example 1. On the cathode side of the membrane-electrode assembly (F), a 1.77 mg/cm² cathode catalyst layer containing the non-precious metal electrode catalyst (E) and the ionomer (C) was formed, and on the anode side thereof, a 1.97 mg/cm² anode catalyst layer containing the platinum-supporting carbon and Nafion (registered trademark) was formed.

### · fabrication of fuel battery cell (F) and evaluation of its electric generation performance

A fuel battery cell (F) was fabricated in the same manner as in Example 1 excepting that the membrane-electrode assembly (F) was used instead of the membrane-electrode assembly (A) in Example 1, and this was evaluated. The fuel battery cell (F) had a current density at 0.4 V of 0.650 A/cm².

### <Example 7>

### · Production of ionomer (D)

In a flask under a nitrogen atmosphere, 5.5 g (84 mmol) of a zinc powder and 172 g of N,N-dimethylacetamide were mixed, then, the temperature in the flask was adjusted to 80ºC. A solution composed of 0.16 g (1.68 mmol) of methanesulfonic acid and 8 g of N,N-dimethylacetamide was added, and the mixture was stirred at 80ºC four 2 hours. After cooling down to 30ºC, 18.0 g (31.3) mmol) of di(2,2-dimethylpropyl) 4,4'-dichlorobiphenyl-2,2'-disulfonate, 5.85 g (10.67 mmol) of 9,9-dioctyl-2,7-dibromofluorene and 89 g of toluene were added, to prepare a solution D1.

In a flask under a nitrogen atmosphere, 2.75 g (12.6 mmol) of anhydrous nickel bromide, 2.95 g (18.9 mmol) of 2,2'-bipyridyl and 148 g of N,N-dimethylacetamide were mixed, the inner temperature was elevated to 65ºC and the mixture was stirred for 1 hour, then, cooled down to an inner temperature of 30ºC, to prepare a solution D2.

The solution D2 was poured into the solution D1, and the mixture was stirred at 30ºC for 2 hours, to obtain a black polymerized solution. Then, the sulfonic acid precursor group was converted into a sulfonate group in the same manner as for production of the ionomer (B) in Example 2, to prepare an ionomer (D). The yielded amount of the ionomer (D) was 13.3 g. The ionomer (D) had a polystyrene-reduced number-average molecular weight Mn of 1.3×10⁵ and a polystyrene-reduced weight-average molecular weight Mw of 3.7×10⁵ and had an ion exchange capacity of 4.5 meq/g.

### · Preparation of cathode catalyst ink (G)

A solution prepared by dissolving 0.024 g of the ionomer (D) in 5.5 mL of ethanol was added to a mixture of 0.10 g of the non-precious metal electrode catalyst (A) and 0.6 mL of water, and the resultant mixture was treated with an ultrasonic wave for 1 hour, then, stirred for 5 hours by a stirrer, to obtain a cathode catalyst ink (G).

### · Fabrication of membrane-electrode assembly (G)

A membrane-electrode assembly (G) was fabricated in the same manner as in Example 1 excepting that the cathode catalyst ink (G) was used instead of the cathode catalyst ink (A) in Example 1. On the cathode side of the membrane-electrode assembly (G), a 1.71mg/cm² cathode catalyst layer containing the non-precious metal electrode catalyst (A) and the ionomer (D) was formed, and on the anode side thereof, a 1.81 mg/cm² anode catalyst layer containing the platinum-supporting carbon and Nafion (registered trademark) was formed.

### · Fabrication of fuel battery cell (G) and evaluation of its electric generation performance

A fuel battery cell (G) was fabricated in the same manner as in Example 1 excepting that the membrane-electrode assembly (G) was used instead of the membrane-electrode assembly (A) in Example 1, and this was evaluated. The fuel battery cell (G) had a current density at 0.4 V of 0.584 A/cm²

### <comparative Example 1>

### · Fabrication of cathode catalyst ink (C1)

After adding 0.6 ml of water to 0.10 g of the non-precious metal electrode catalyst (A), 0.48 g of a 5 wt% Nafion (registered trademark) solution (manufactured by Aldrich, ion exchange capacity: 1.0 meq/g) and 5.5 ml of ethanol were added, and the resultant mixture was treated with an ultrasonic wave for 1 hour, then, stirred for 5 hours by a stirrer, to obtain a cathode catalyst ink (C1).

### · Fabrication of membrane-electrode assembly (C1)

A membrane-electrode assembly (C1) was fabricated in the same manner as in Example 1 excepting that the cathode catalyst ink (C1) was used instead of the cathode catalyst ink (A) in Example 1. On the cathode side of the membrane-electrode assembly(C1), a 1.81mg/cm² cathode catalyst layer containing the non-precious metal electrode catalyst (A) and Nafion (registered trademark) was formed, and on the anode side thereof, a 1.78mg/cm² anode catalyst layer containing the platinum-supporting carbon and Nation (registered trademark) was formed.

### · Fabrication of fuel battery cell (C1) and evaluation of its electric generation performance

A fuel battery cell (C1) was fabricated in the same manner as in Example 1 excepting that the membrane-electrode assembly (C1) was used instead of the membrane-electrode assembly (A) in Example 1, and this was evaluated. The fuel battery cell (C1) had a current density at 0.4 V of 0.017 A/cm².

### Explanation of numerals

10: Fuel battery cell
12: Electrolyte membrane (proton conductive membrane)
14a, 14b: Catalyst layer
16a, 16b: Gas diffusion layer
18a, 18b: Separator
20: Membrane-electrode assembly

## Claims

1. A membrane-electrode assembly having catalyst layers containing an electrode catalyst disposed on the both sides of an electrolyte membrane, wherein at least one of said catalyst layers contains a non-precious metal electrode catalyst and an ionomer having an ion exchange capacity of 1.2 meq/g or more.

2. The membrane-electrode assembly according to Claim 1, wherein said non-precious metal electrode catalyst contains at least one metal selected from the group consisting of titanium, vanadium, chromium, manganese, iron, cobalt, nickel, copper, zirconium, niobium, molybdenum, tantalum and tungsten.

3. The membrane-electrode assembly according to Claim 1 or 2, wherein said non-precious metal electrode catalyst is composed of a metal complex or a modified metal complex.

4. The membrane-electrode assembly according to any one of Claims 1 to 3, wherein said ionomer is a polymer electrolyte having an aromatic ring in the main chain and having a sulfonate group and/or phosphonated group in the molecule.

5. The membrane-electrode assembly according to any one of Claims 1 to 4, wherein the catalyst layer containing a non-precious metal electrode catalyst and an ionomer having an ion exchange capacity of 1.2 meq/g or more contains further a carbon carrier, and the weight ratio of the ionomer with respect to the weight of said carbon carrier is more than 0 and 1.0 or less.

6. The membrane-electrode assembly according to any one of Claims 1 to 5, wherein said electrolyte membrane is an aromatic hydrocarbon polymer electrolyte membrane.

7. A fuel battery comprising the membrane-electrode assembly according to any one of Claims 1 to 6.
